# EUROPÄISCHE PATENTSCHRIFT

(11) **EP 0 611 334 B1**
(45) Veröffentlichungstag und Bekanntmachung des Hinweises auf die Patenterteilung: **04.10.1995**
(21) Anmeldenummer: 92922022.6
(22) Anmeldetag: 17.10.1992
(51) Int. Cl.: B23B 27/14

(54) **SCHNEIDEINSATZ**
CUTTING TOOL
INSERT DE COUPE

(30) Priorität: 05.11.1991 DE 4136417
(43) Veröffentlichungstag der Anmeldung: 24.08.1994
(73) Patentinhaber: Widia GmbH, 45145 Essen (DE)
(72) Erfinder: AGUSTIN PAY , José, D-4330 Mülheim (DE)
(74) Vertreter: Vomberg, Friedhelm, Dipl.-Phys.
(86) Internationale Anmeldenummer: DE9200886
(87) Internationale Veröffentlichungsnummer: WO9308944

(56) Entgegenhaltungen:
- EP-A- 0 066 091
- EP-A- 0 278 083
- EP-A- 0 318 000
- EP-A- 0 318 000
- US-A- 4 359 300
- US-A- 4 846 609
- US-A- 4 859 122

## Beschreibung

Die Erfindung betrifft einen vieleckigen Schneideinsatz zur spanbildenden Bearbeitung, dessen mindestens einseitige Deckfläche die Spanfläche und dessen umlaufende Seitenflächen die Freiflächen bilden, wobei die Spanfläche einen zentralen, gegenüber der durch die Schneidkanten definierten Ebene oder gegenüber einer sich an die Schneidkante anschließenden, ggf. darin angeordnete einzelne Erhebungen aufweisende Spanbrechernut erhabenen Spanbrecher besitzt.

Ein solcher Schneideinsatz ist aus der US-A-4 846 609 bekannt.

Aus der DE-A-22 31 631 ist ein Schneidwerkzeug mit einem Spanbrecher bekannt, bei dem sich in der an die Schneidkante angrenzenden Nut mindestens ein erhabener kegelstumpfförmiger Vorsprung befindet. Dieses Schneidwerkzeug wird als zum Brechen von leichten abgehobenen Spänen bezeichnet. Auch nach dem in der DE-B-23 09 443 gemachten Vorschlag sind in Spanbrechernuten eine Vielzahl von mit Abstand nebeneinanderliegenden Kugelsegmenten bestehende Spanbrechervorsprünge angeordnet.

Die genannten Schneideinsätze sich jedoch aufgrund der Anordnung der Spanformelemente und der Spanbrechernutgeometrie nur in einem begrenzten Bereich unterschiedlicher Schnittbedingungen, wie etwa unterschiedlicher Schnittiefen, Vorschüben, Schnittgeschwindigkeiten sowie Werkstoffe verwendbar. Um die Einsatzmöglichkeit der Schneideinsätze zu erhöhen und zur besseren Formung und Entfernung des Spanes ist in der DE 31 48 535 C2 vorgeschlagen worden, die Spanformelemente imwesentlichen pyramidenstumpfförmig mit im wesentlichen dreieckiger Grundfläche auszubilden, wobei jeweils eine der Grundflächenbegrenzungslinien in Richtung der benachbarten Schneidkante entweder parallel hierzu oder auf einer Bogenlinie ausgerichtet bzw. angeordnet ist.

Nach der DE 28 10 824 A1 wird bei einem einseitig verwendbaren Schneideinsatz vorgeschlagen, im Zentrum der Oberseite eine Erhebung anzuordnen, die als Vieleck ausgebildet sein kann und der Grundform des Schneideinsatzes entspricht. Insbesondere können die Ecken der als Vieleck ausgebildeten Erhebung auf die Mitte der Schneiden, im übrigen jedoch ringförmig ausgebildet sein. Es sind auch schon solche Schneidelemente bekannt, bei denen der zentrale Spanbrecher als Spanformstufe ausgebildet ist, wobei sich die Spanformerhebung bis in den Schneideckenbereich erstreckt. Der Nachteil dieser Ausführungsform besteht darin, daß beim Schneiden ein erhöhter Druck entsteht, der zu einem frühzeitigen Schneideinsatzverschleiß führt. Ebenso ist die erreichbare Schneidqualität unbefriedigend.

Man hat daher anstelle der weit hervorragenden Spanbrecherstufe im Eckenbereich Kugelsegmente oder ähnliches vor der Spanbrecherstufe angeordnet und zum Teil diese Formen bis hin zu Kegel- oder Pyramidenstümpfen variiert. Der Nachteil dieser Schneideinsätze liegt darin, daß deren Oberflächengeometrie bei der Herstellung auf pulvermetallurgischem Weg Schwierigkeiten bereitet, da die Spanformelemente komplizierte Gebilde darstellen, die nur schwer preßtechnisch realisierbar sind. Darüber hinaus hat sich herausgestellt, daß durch die separate Anordnung der Spanformelemente im Eckenbereich eine verschlechterte Wärmeabfuhr gegeben war, die ebenfalls zu einem erhöhten Schneidplattenverschleiß führt. Darüber hinaus ist eine Ausbildung aus Wendeschneidplatte für solche Spanformelemente kritisch, die sowohl zur Spanformung als auch als Auflagefläche (nach dem Wenden) dienen müssen.

Um auch bei stark differierenden Vorschüben bzw. Schnittiefen sowie Schnittgeschwindigkeiten ein ausgeglichenes gutes Spanbildungsverhalten zu gewährleisten, ist ferner in der EP 0 278 083 A1 vorgeschlagen worden, in dem sich auf der Spanfläche rechtwinklig zur Schneidkante an die Fase anschließenden Bereich einen Spanwinkel von mehr als 30° vorzusehen, wobei der Spanwinkel mit zunehmendem Abstand von der Fase kleiner wird und in den zwischen den Schneideckenbereichen liegenden Spanflächenbereichen des Schneidkörpers in Spanablaufrichtung verlaufende und mit Seitenabstand nebeneinander angeordnete Spanrippen aus der Spanfläche herausragend vorzusehen, zwischen denen weitere Erhebungen mit Auflauframpen liegen. Im Eckenbereich befinden sich drei nebeneinander angeordnete Graderhebungen, deren beide äußeren mit ihren Gradlängsachsen parallel zu den ihnen benachbarten Spanrippen verlaufen. Auch diese Schneidplatte ist nur einseitig verwendbar, da die Spanbrecher keine ausreichend sichere Auflagefläche bilden können.

Die EP 0 143 758 besitzt langgestreckte Rippen, die im Querschnitt trapezförmig sind und parallel zur Schneidkante verlaufen. Diese Rippen werden durch Mulden unterbrochen.

Die EP-A2-0 318 000 beschreibt einen Schneideinsatz mit einer sich an die Schneidkante anschließenden Spanformnut sowie erhabenen und die Schneidkante überragenden Erhebungen. Im Bereich der Schneidecke sind ggf. weitere sich anschließende Erhebungen versehen, die an der Vorderseite einen rampenförmigen Auflaufteil aufweisen.

Als zur Erzeugung von Wendelspänen günstig haben sich bisher die Schneidplatten mit Spanformelementen durchgesetzt.

Es ist Aufgabe der vorliegenden Erfindung, den eingangs genannten Schneideinsatz dahingehend zu verbessern, daß seine Oberflächengeometrie dergestalt sein soll, daß sie bei der Fertigung auf pulvermetallurgischem Weg ohne Ausschuß herstellbar ist, so daß er ggf. als Wendeschneidplatte ausgebildet werden kann. Ferner soll der Schneideinsatz bei der Werkstückbearbeitung einen möglichst geringen Druck in der Schneidecke bei gleichzeitig guter Wärmeabfuhr aus der Schneidecke zeigen.

Diese Aufgabe wird durch den vieleckigen Schneideinsatz nach Anspruch 1 gelöst. Der Spanbrecher läuft in Form mindestens einer keilförmigen im Spanablaufbereich angeordneten Längsrippe aus. Um einen scharfkantigen Übergang an der Spanfläche zu vermeiden, der leicht zu Ausbrechungen führen kann, ist die Längsrippe im Querschnitt kantenfrei konvex ausgebildet und läuft - im zur Längsachse der Längsrippe senkrechten Querschnitt betrachtet - zu der sie umgebenden Spanfläche oder zu der Spanbrechernut hin unter einem größeren Radius aus als im oberen Bereich aus. In einer Draufsicht sind die Längsrippen an ihrem der Schneidecke zugewandten Ende keilförmig ausgebildet und laufen unter einem Keilwinkel kleiner als 20° (gemessen an der Längsachse) aus. Entlang der Längsachse verläuft die Längsrippe ebenfalls konvex. Der besondere Vorteil dieser Erfindung besteht darin, daß die Schneideinsätze infolge der weiten Erstreckung der Längsrippen für unterschiedliche Schnittbedingungen von der Feinbearbeitung bis zur sogenannten mittleren Bearbeitung mit verschiedenen Schnittiefen sowie auch Schruppbearbeitungen eingesetzt werden kann. Die Entstehung von Wirrspänen wird vermieden, da der ablaufende Span durch die Längsrippe bzw. Längsrippen geführt und reibungsarm umgelenkt und geformt wird. Durch die unmittelbare Verbindung der Längsrippe bzw. Längsrippen mit dem (mittleren) Spanbrecher verbessert sich auch die Wärmeabfuhr aus dem Schneideckenbereich, wodurch ein dortiger erhöhter Verschleiß vermieden wird. Der zentrale Spanbrecher einschließlich der sich anschließenden Längsrippen ist auch für die pulvermetallurgische Herstellung gut geeignet, da das Auslösen des Rohlings aus dem Preßwerkzeug leicht möglich ist, ohne daß Rückstände im Werkzeug verbleiben. Dies verbessert die Herstellrate, da Ausschußstücke vermieden werden. Des weiteren muß die Preßform nur noch in größeren Zeitabständen als bisher notwendig gereinigt werden.

Weiterbildungen der Erfindung sind in den Unteransprüchen beschrieben.

So sind die Längsrippen vorzugsweise deutlich niedriger als die Spanbrecher oder die zentrale Spanformebene im übrigen ausgebildet. Hiermit wird die vorteilhafte Kombination einer guten Spanformung und -führung mit einem relativ geringen Verschleiß an dem schneidkantennahen Bereich erzielt.

Vorzugsweise läuft der Spanbrecher zur einem Schneideckenbereich hin in Form von mindestens einer Längsrippe aus, die symmetrisch zu einer Schneideckenwinkelhalbierenden angeordnet sind und deren Längsachsen einen gemeinsamen Schnittpunkt im Bereich des Spanbrechers aufweisen. Hierunter wird sowohl die einrippige Ausführungsform verstanden, bei der die Längsrippe bzw. deren Mittellängsachse deckungsgleich mit der Seitenhalbierenden liegt als auch die Ausführungsformen, bei denen, ggf. zusätzlich, beidseitig der Winkelhalbierenden jeweilige Längsrippen angeordnet sind. Vorzugsweise werden bei dieser Ausführungsform zwei bis fünf Längsrippen pro Schneidecke vorgesehen.

Der Winkel zwischen der Längsachse der Längsrippe und der Winkelhalbierenden der Schneidecke liegt bei 0° oder zwischen 15° und 45°, vorzugsweise 15 bis 30°. Die 0°-Stellung kommt nur bei ungeradzahliger Anzahlen von Längsrippen infrage, d.h., wenn die übrigen Rippen symmetrisch zu der mittleren, unmittelbar in die Schneidecke weisenden Rippe angeordnet sind. Die Auswahl der Richtung der Längsrippen kann jedoch auch in bezug auf den Schneideckenradius sowie hin zu unsymmetrischen Formen variiert werden. So kann die Längsrippe bzw. können die Längsrippen auch asymmetrisch zur Schneideckenwinkelhalbierenden angeordnet sein, wobei deren Längsachse bzw. Längsachsen und/oder deren Längsachsen und die Winkelhalbierende einen gemeinsamen Schnittpunkt im Bereich des Spanbrechers aufweisen. Die Asymmetrie kann so weit geführt werden, daß je nach Schnittbedingungen und Werkstückbearbeitung die Längsrippen unterschiedlich lang sind, d.h., beispielsweise zu den Schneidecken ferneren Bereichen hin kürzer werden.

Vorzugsweise wird eine spiegelsymmetrische Ausbildung der Spanbrecher zu mindestens einer Mittelsenkrechten einer Verbindungslinie zweier Schneidecken gewählt, insbesondere bei viereckigen Schneideinsätzen mit einer größeren Länge als deren Breite.

Die Erfindung erfaßt ferner auch solche Kombinationen, bei denen sich an eine zentrale erhabene Spanformebene sowohl mindestens ein nasenartiger Vorsprung als auch hieran angrenzende Längsrippen anschließen. Bekannt sind nach dem Stand der Technik Schneideinsätze mit einer zentralen erhabenen Spanformebene, die über eine Böschung in an die Schneidkante bzw. Schneidkanten angrenzende Randbereiche oder dortige Spanformnuten übergeht. Erfindungsgemäß sollen sich an diese Spanformebene nasenartige Vorsprünge und hieran relativ schmalere Längsrippen anschließen. Prinzipiell wird hier an eine "große Nase" ein "kleiner Finger" angeschlossen. Vorzugsweise besitzen die nasenartigen Vorsprünge eine größere Höhe als die Längsrippen, wobei insbesondere die nasenartigen Vorsprünge eine in der gleichen Ebene liegende Deckfläche, wie die zentrale Spanformebene, besitzen können.

Die Schneideckenradien variieren zwischen 0,2 bis 2,4 mm, vorzugsweise zwischen 0,2 bis 1,6 mm.

Nach einer weiteren Ausgestaltung der Erfindung enden die Längsrippen in einem Abstand von 0,05 bis 0,8 mm, vorzugsweise 0,05 bis 0,3 mm, vor der Schneidkante. Hierdurch wird erreicht, daß der ablaufende Span sich zunächst der Spanfläche bzw. der Spanbrechernut anpaßt, bevor er auf eine Längsrippe stößt, was zu einer plastischen Verformung des Spanes führt, diesen bereits senkrecht zur Spanfläche ablenkt. Sofern eine Spanbrechernut (mit oder ohne Fase im Anschluß an die Schneidkante) vorgesehen ist, liegt die Oberfläche der Längsrippe nach einer konkreten Ausführungsform unterhalb der Fläche des zentralen Spanbrechers. Die Höhe der Längsrippe beträgt nach einer weiteren Ausgestaltung der Erfindung 0,03 mm bis 0,5 mm, vorzugsweise 0,03 mm bis 0,08 mm.

Insbesondere hat die konvexe Form der Längsrippe im oberen Bereich einen Radius zwischen 0,1 bis 0,5 mm vorzugsweise 0,1 bis 0,3 mm. Ferner läuft die Längsrippe vorzugsweise unter einem Winkel von mindestens 45° gegenüber einer Normalen aus. Hierdurch ergibt sich ein parabelförmiger Querschnittsverlauf.

In einem Querschnitt parallel zur Schneidkante (oder einer dort angelegten Tangentialebene) bilden die Seitenflächen der Längsrippe im Bereich der Spanfläche oder der Spanbrechernut einen Winkel zwischen 80 bis 120°, vorzugsweise zwischen 90 und 100°, wobei der Auslaufwinkel zur Schneidecke hin möglichst spitz, d.h. unter 10° gewählt wird. Als bevorzugt für die Längsrippenbreite - gemessen im Bereich der Spanfläche oder der Spanbrechernut - hat sich ein Maß zwischen 0,2 bis 1,5 mm erwiesen. Die Länge der Längsrippen, gemessen von dem Anschlußstück an dem zentralen Spanbrecher bis zur Spitze ist 5 bis 20mal größer als die genannte Basisbreite.

Bevorzugt steigt der zentrale Spanbrecher gegenüber einer durch die Schneidkanten definierten Ebene unter einem Winkel von 20 bis 40° an, er kann jedoch nach einer weiteren Ausgestaltung auch im Anschluß an die Längsrippen ballig ausgebildet sein und eine konvexe Oberfläche besitzen.

Ausführungsformen der Erfindung sind in den Zeichnungen dargestellt. Es zeigen
- Fig. 1 bis 3: jeweils Draufsichten auf den Schneideckenbereich einer erfindungsgemäßen Wendeschneidplatte,
- Fig. 4: einen Querschnitt längs der Linie A - A nach Fig. 2,
- Fig. 5: einen entsprechenden Querschnitt gemäß Fig. 4 eines Schneidplattenrohlings,
- Fig. 6: einen Querschnitt entlang der Linie B - B gemäß Fig. 2,
- Fig. 7: eine Draufsicht auf einen Schneideckenbereich einer erfindungsgemäßen Wendeschneidplatte mit einem andersartig geformten zentralen Spanbrecher,
- Fig. 8a bis c: drei unterschiedliche Ansichten einer Schneidplatte mit nur einer Längsrippe,
- Fig. 9: eine Teilansicht des Schneideinsatzes nach Fig. 8a mit zwei Längsrippen,
- Fig. 10: Schneideinsätze nach Fig. 8a bis c und 9 im Einsatz - hier Drehen einer Kurbelwelle,
- Fig. 11a bis c: drei verschiedene Ansichten einer viereckigen Schneidplatte und
- Fig. 11d: eine vergrößerte Teilansicht dieses Schneideinsatzes.

Der in den Figuren dargestellte Schneideinsatz besitzt eine als Spanfläche 10 ausgebildete Deckfläche sowie senkrecht oder unter einem entsprechenden Freiwinkel angeordnete Freiflächen 11, die mit den Spanflächen zusammen die jeweilige Schneidkante 12 bilden. Der Schneideinsatz kann alle in der Praxis verwendeten Grundflächen aufweisen, insbesondere kann er dreieckig, quadratisch oder rhombisch ausgebildet sein. Üblicherweise besitzt die Wendeschneidplatte entweder eine zentrische Bohrung oder sonstige Auflageflächen bzw. Mulden zur geeigneten Klemmung.

Die Spanfläche 10 weist einen zentralen Spanbrecher 13 auf, der sich im Abstand von der jeweiligen Schneidkante 12 befindet und erhaben ausgebildet ist. Zwischen dem Spanbrecher 13 und der Schneidkante 12 schließt sich eine Spanbrechernut 14 an, die in nach dem Stand üblicher Weise gefertigt ist.

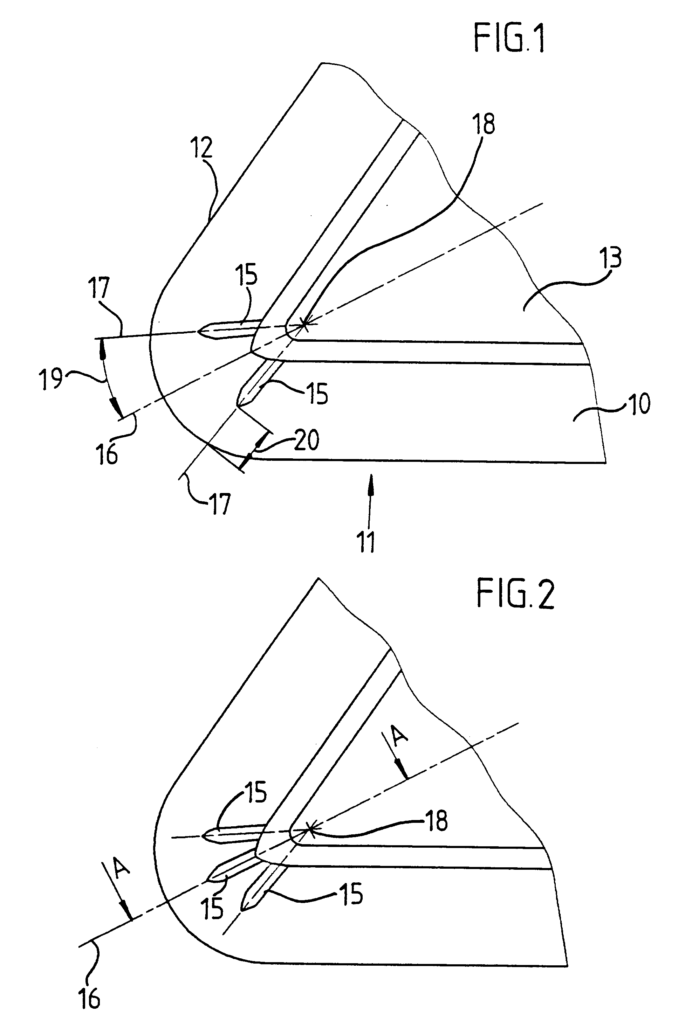

Die vorliegende Erfindung ist dadurch charakterisiert, daß der Spanbrecher 13 zu dem Schneideckenbereich hin in Form von zwei, drei, vier oder fünf Längsrippen 15 ausläuft, die symmetrisch zu einer Schneidkantenwinkelhalbierenden 16 angeordnet sind und deren Längsachsen 17 einen gemeinsamen Schnittpunkt 18 im Bereich des Spanbrechers 13 aufweisen. Der Winkel 19 zwischen der Längsachse 17 sowie der Schneidkantenwinkelhalbierenden 16 nach Fig. 1 bei nur zwei Längsrippen beträgt 30°. Werden mehr als zwei Längsrippen angeordnet, beträgt der jeweilige Winkel 19 zwischen der der Schneidkantenwinkelhalbierenden 16 nächsten Längsrippen 15 bzw. den Längsachsen 17 zweier benachbarter Längsrippen 15 jeweils 30°. Der Winkel kann jedoch bei unterschiedlichen Eckenradien, die zwischen 0,2 bis 2,4 mm liegen, auch variiert werden. Die Längsrippen 15 bilden eine fächerförmige Verlängerung der durch den Spanbrecher 13 dargestellten Erhebung in Richtung der Schneidecke. Die Längsrippen enden in einem Abstand 20 von 0,05 bis 0,8 mm bzw. höchstens 0,3 mm bei Werkzeugen für die Feinbearbeitung.

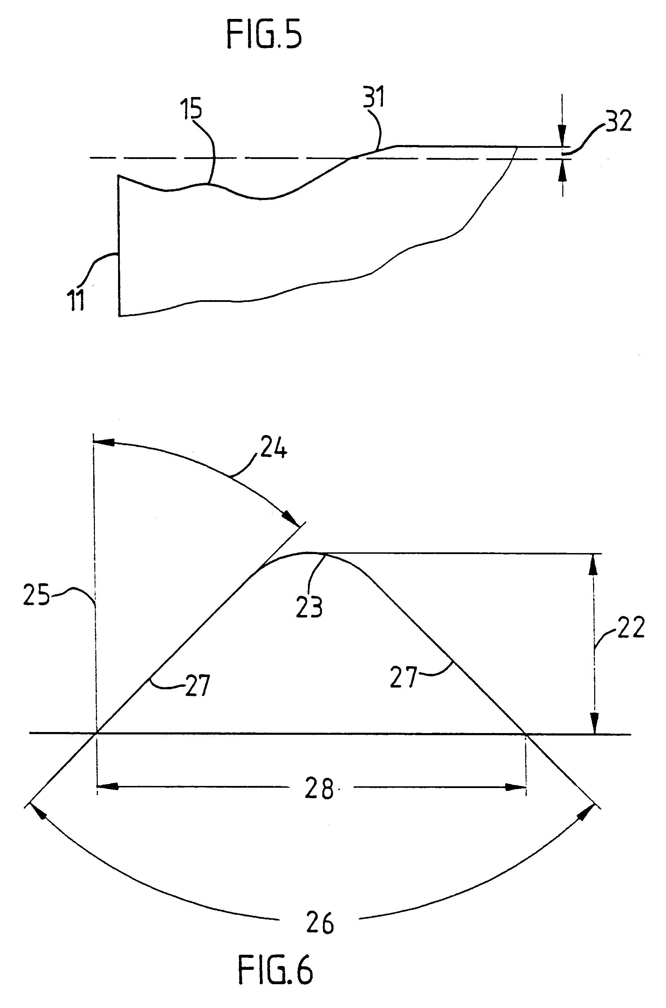

Das Maß der Erhebung der Längsrippen 15 aus der Spanbrechernut bzw. gegenüber dem Spanbrecher 13 ist aus Fig. 4 ersichtlich. In dem darin dargestellten Ausführungsbeispiel fällt im Anschluß an die Schneidkante 12 die Spanbrechernut unter einem Winkel von etwa 20° ab. Der Anstiegswinkel des Flächenstückes 21 als Teil des Spanbrechers 13 ist regelmäßig höher und kann bis zu 30° betragen. Die Längsrippe 15 besitzt gegenüber der sie umgebenden Spanfläche oder der Spanbrechernut 14 eine Höhe 22 zwischen 0,03 mm bis 0,5 mm, vorzugsweise bis 0,08 mm, bei Feinbearbeitungswerkzeugen. Die Höhe 22 der Längsrippen 15 ist jedoch deutlich kleiner als die gegenüber der Schneidkantenebene definierten Höhe der Spanbrecher 13. Wie insbesondere aus Fig. 4 und 6 ersichtlich, besitzen die Längsrippen sowohl eine im Längs- als auch im Querschnitt kantenfreie konvexe Form, die im Querschnitt einen Radius 23 von maximal 0,5 mm, vorzugsweise 0,3 mm, aufweist. Zur Spanfläche bzw. zur Spanbrechernut 14 hin wird der Radius größer, wodurch sich ein Winkel 24 von mindestens 45° gegenüber einer Normalen 25 auf der Spanfläche bzw. der Spanbrechernut 14 ergibt. Wie aus Fig. 4 ersichtlich, ergibt sich hierbei ein Winkel 26 zwischen den Seitenflächen 17 der Längsrippen 15 von ca. 90°. Die maximale Breite der Längsrippen 15, nämlich die im Bereich der Spanfläche oder der Spanbrechernut gemessene Basisbreite 28 beträgt 0,5 bis 1,5 mm, wobei die Länge 29 der Längsrippen, gemessen bis zum Fußpunkt 30 des Spanbrechers 13, 5 bis 20mal großer als die genannte Basisbreite ist.

Der Schneideinsatz wird auf pulvermetallurgischem Wege hergestellt, also unter Zuhilfenahme einer Preßform. Diese Preßform ist so ausgebildet, daß sich der in Fig. 5 dargestellte Rohling ergibt, bei dem im Anschluß an die Fläche 21 noch ein Flächenstück 31 vorhanden ist, das unter einem flacheren Winkel zur angenommenen Horizontalen steht. Der mit 32 gekennzeichnete Bereich wird zur Fertigstellung der gewünschten Schneidplatte abgeschliffen.

Das mit 21 bezeichnete Flächenstück kann jedoch auch ballig, d.h. konvex, ausgeführt sein.

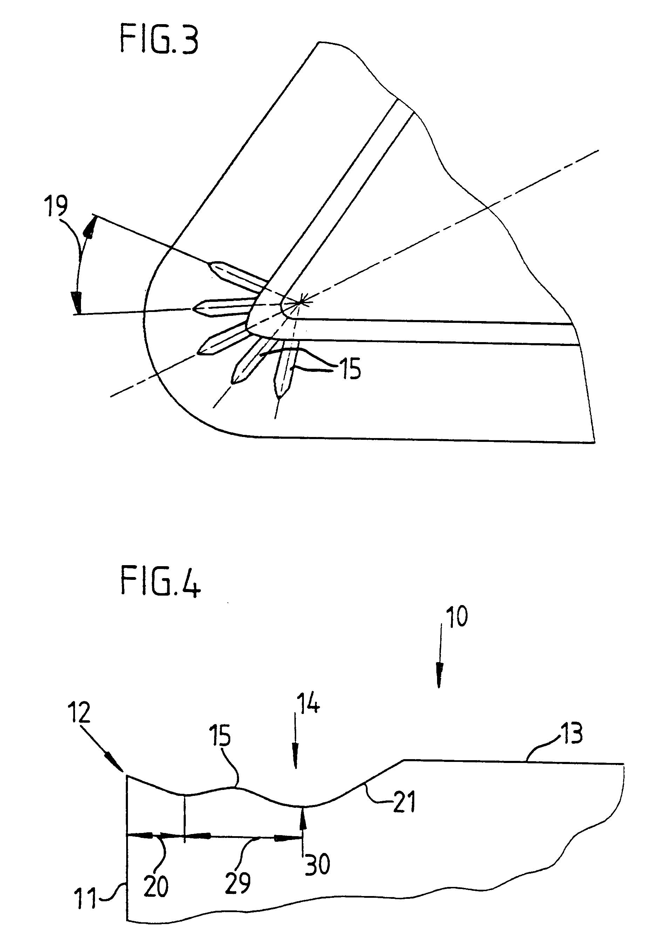

Die Längsrippen laufen zur Schneidkante hin in der Draufsicht nach Fig. 1 bis 3 gesehen keilförmig aus, wobei der Keilwinkel 33 maximal 20° betragen sollte.

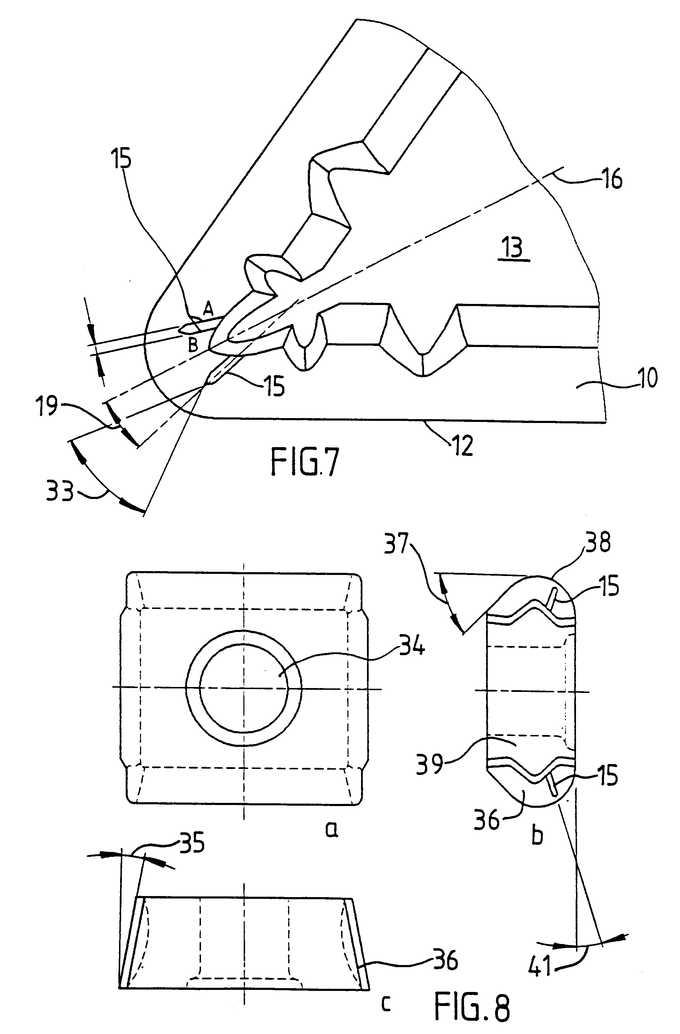

Fig. 7 zeigt einen Schneideinsatz mit einem zentralen Spanbrecher 13, der an den der jeweiligen Schneidkante 12 gegenüberliegenden Begrenzungsflächen nicht geradflächig, sondern geschwungen ausgebildet ist, so daß sich einzelne vorstehende Erstreckungsbereiche in Richtung der jeweiligen Schneidkante ergeben.

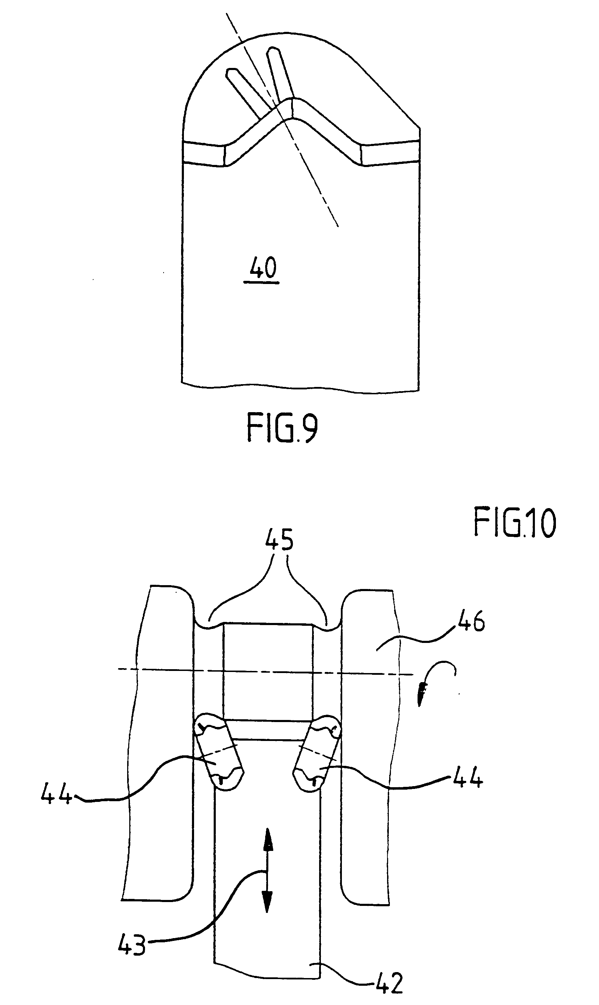

Nach einer weiteren Ausführungsform kann die erfindungsgemäße Ausgestaltung der Spanformelemente auch für Schneideinsätze zum Stechen, Drehen, Dreh-Räumen, Dreh-Dreh-Räumen und ähnliche Verfahren angewendet werden, bei denen der Schneideinsatz nicht symmetrisch, sondern nur mit einer Seite der Spanfläche einsetzbar ist. Ein solcher Schneideinsatz ist in den Fig. 8a bis c in drei Ansichten dargestellt. Der in einer Grundansicht viereckige, doppelseitig verwendbare Schneideinsatz besitzt eine Mittelbohrung 34 und weist ferner zwei gegenüberliegende unter einem Winkel 35 zwischen 5 bis 20°, vorzugsweise 10 bis 15°, liegende Spanflächen 36 auf, die einen rechteckigen Grundquerschnitt haben. Der Schneideinsatz besitzt zwei gegenüberliegende abgerundete Schneidecken, wobei der Öffnungswinkel 37 30 bis 60°, vorzugsweise 45 bis 50°, beträgt. Der Radius 38 der Schneidkantenrundung liegt zwischen 1 bis 10 mm, vorzugsweise bei 1,5 bis 5 mm. Die Spanfläche 36 besitzt eine Erhebung von 0,1 mm (bezogen auf die Schneidkantenebene), wobei die Erhebung 39 als Spanformer wirkt und in Form von mindestens einer Längsrippe 15 ausläuft. Die in Fig. 8b dargestellte unsymmetrische Schneidkörperform besitzt nur eine Längsrippe, wohingegen in Fig. 9 bei einer symmetrischen Ausgestaltung des Spanformers 40 zwei Längsrippen 15 vorgesehen sind. In jedem Falle muß der Hauptspanformer 39, 40 so gestaltet sein, daß die Schneidkante freigelegt ist und das Hauptspanformelement im Anwendungsbereich zur Schneidkante hin etwa spitz ausläuft. An diese abgerundete spitze Längsrippe schließt sich unter einem Winkel 41 zwischen 0 und 90°, vorzugsweise 10 bis 50°, die Längsrippe 15 gegenüber dem zentralen Spanformelement lückenlos an. Die Längsrippen 15 sind in jedem Falle so ausgestaltet, daß deren Basisgrenzflächen zur Spanfläche bzw. einer dortigen Spanbrechernut zunächst parallel laufen und erst nach vorne hin eine keilförmige Verjüngung erfahren, wobei der Keilwinkel zwischen 10 und 20° beträgt.

In Fig. 10 ist die Schneidplatte nach Fig. 8 und 9 im Einsatz dargestellt. Auf einem gemeinsamen Trägerwerkzeug 42, das in Richtung des Doppelpfeiles 43 bewegbar ist, sind zwei Schneideinsätze 44 zum Abspanen von Freistichen 45 einer Kurbelwelle 46 dargestellt. Die Schneideinsätze 44 stehen wie beim Drehen auf die Werkstückmitte gerichtet.

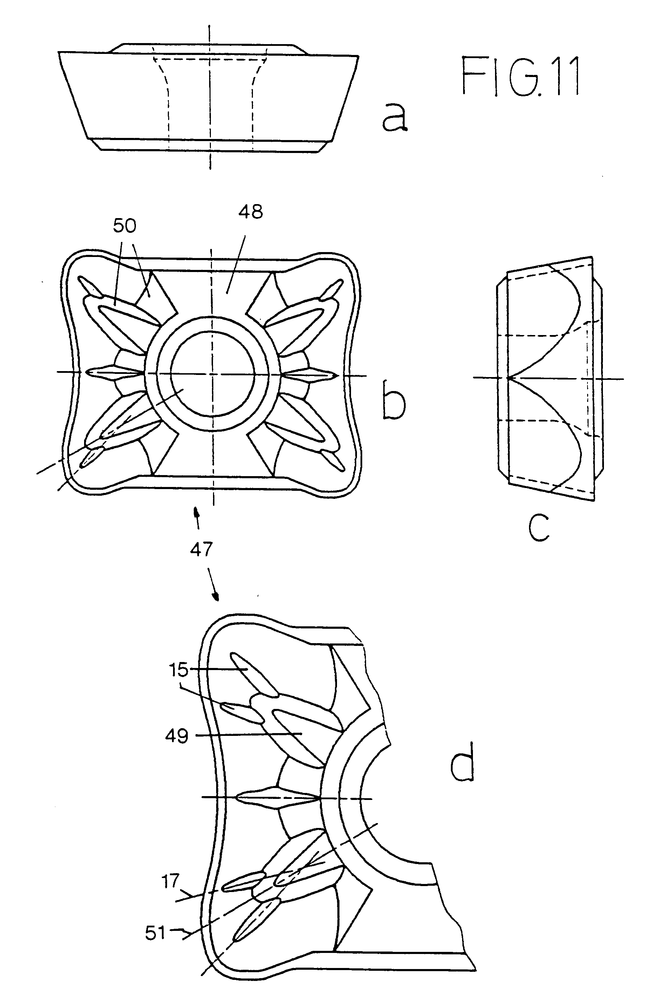

Der in Fig. 11a bis d dargestellte Schneideinsatz besitzt an seinen Schmalseiten jeweilige Hauptschneidkanten, die durch Schneidecken begrenzt werden. Wie insbesondere aus Fig. 11b ersichtlich, ragt eine Spanformebene 48 über die durch die vier Schneidecken gebildete Ebene heraus, wobei diese Spanformebene 48 über eine Böschung 50 in den letztgenannten Bereich übergeht. Die Spanformebene 48 geht jedoch (siehe Fig. 11d) im Bereich der Hauptschneidkante zunächst in einen nasenförmigen Vorsprung 49 über, dessen obere Deckfläche die gleiche Höhe besitzt wie die Deckfläche der Spanformebene 48. Auch dieser nasenförmige Vorsprung fällt über dieselbe Böschung 50 ab, allerdings befindet sich an seinem vorderen Ende noch eine oder zwei Längsrippen 15 (vgl. Fig. 11b, 11d). Wie Fig. 11d zu entnehmen ist, schneiden sich die Längsmittelachse 51 der Nase 49 sowie die Längsachsen 17 der Längsrippen in einem gemeinsamen Schnittpunkt auf der Nase, die Teil des Spanbrechers ist. Wie insbesondere aus Fig. 11d ersichtlich, kommt es nicht zwingend darauf an, daß die Nase bzw. deren Längsachse deckungsgleich mit der Schneideckenwinkelhalbierenden liegt, die Anordnung kann entsprechend der Darstellung auch versetzt gewählt sein. Ebenso kann je nach Bearbeitungsvorgang die Längsrippe auch asymmetrisch zur Winkelhalbierenden bzw. zur Nase oder deren Längsachse angeordnet sein. Schließlich kann entsprechend der Darstellung in Fig. 11d die Länge der Längsrippen 15 unterschiedlich groß sein.

Mit der vorliegenden Erfindung ausgestattete Wendeschneidplatten der Form DNMG150612 wurden bei Schnittgeschwindigkeiten von 160 m/min zur Bearbeitung des Werkstoffes CK45N eingesetzt. Insbesondere bei hohen Schnittiefen von 4,0 mm konnten bei wesentlich höheren Vorschüben noch saubere Spanbildungen der erfindungsgemäßen Schneidplatte im Gegensatz zu nach dem Stand der Technik bekannten Platten festgestellt werden. Entsprechendes ergab sich auch bei der Bearbeitung des Werkstoffes X5CrNi18.9.

## Patentansprüche

1. Vieleckiger Schneideinsatz zur spanbildenden Bearbeitung, dessen mindestens einseitige Deckfläche die Spanfläche (10) und dessen umlaufende Seitenflächen die Freiflächen (11) bilden, wobei die Spanfläche (10) einen zentralen, gegenüber der durch die Schneidkanten (12) definierten Ebene oder gegenüber einer sich an die Schneidkante (12) anschließenden ggf. darin angeordnete einzelne Erhebungen aufweisende Spanbrechernut (14) erhabenen Spanbrecher (13) besitzt,
**dadurch gekennzeichnet**,
daß der Spanbrecher (13, 48) in Form mindestens einer keilförmigen im Spanablaufbereich angeordneten Längsrippe (15) mit einer im Längsquerschnitt und im hierzu senkrechten Querschnitt kantenfreien konvexen Form ausläuft, wobei die Längsrippe(n) (15) - im zur Längsachse der Längsrippe senkrechten Querschnitt betrachtet - zur sie umgebenden Spanfläche oder der Spanbrechernut (14) hin unter einem größeren Radius als in ihrem oberen Bereich ausläuft und an ihrem der Schneidecke zugewandten Ende keilförmig ausgebildet ist und aus einer Draufsicht betrachtet unter einem Keilwinkel (33) kleiner als 20° ausläuft.

2. Vieleckiger Schneideinsatz nach Anspruch 1, dadurch gekennzeichnet, daß die Längsrippen (15) eine deutlich niedrigere Höhe als der Spanbrecher (49) oder die zentrale Spanformebene im übrigen aufweisen.

3. Vieleckiger Schneideinsatz nach Anspruch 1 oder 2, dadurch gekennzeichnet, daß die Längsrippe (15), vorzugsweise zwei bis fünf Längsrippen (15) pro Schneidecke, symmetrisch zu einer Schneideckenwinkelhalbierenden (16) angeordnet sind und daß deren Längsachsen (17) einen gemeinsamen Schnittpunkt (18) im Bereich des Spanbrechers (13) aufweisen und/oder daß der Winkel (19) zwischen der Längsachse (17) der Längsrippe (15) und der Winkelhalbierenden (16) der Schneidecke oder zwei Längsachsen benachbarter Längsrippen (15) 0° oder 15 bis 45°, vorzugsweise 15 bis 30°, ist.

4. Vieleckiger Schneideinsatz nach Anspruch 1 oder 2, dadurch gekennzeichnet, daß die Längsrippe(n) (15) asymmetrisch zur Schneideckenwinkelhalbierenden angeordnet ist (sind) und daß deren Längsachsen (17) und/oder deren Längsachsen (17) und die Winkelhalbierende einen gemeinsamen Schnittpunkt im Bereich des Spanbrechers aufweisen.

5. Vieleckiger Schneideinsatz nach einem der Ansprüche 1 bis 4, dadurch gekennzeichnet, daß die Längsrippen (15) unterschiedlich lang sind.

6. Vieleckiger Schneideinsatz nach einem der Ansprüche 1 bis 4, gekennzeichnet durch eine spiegelsymmetrische Ausbildung der Spanbrecher (48, 49, 15) zumindestens einer Mittelsenkrechten einer Verbindungslinie zweier Schneidecken.

7. Vieleckiger Schneideinsatz nach einem der Ansprüche 1 bis 6, gekennzeichnet durch eine zentrale sich über einen an die Schneidkante(n) angrenzenden Randbereich erhabene Spanformebene (48), die zur Schneidkante hin über eine Böschung (50) in den Randbereich und/oder eine Spannut übergeht und die sowohl nasenartige Vorsprünge (49) als auch sich hieran anschließende Längsrippen (15) aufweist, wobei die nasenartigen Vorsprünge (49) vorzugsweise eine größere Höhe als die Längsrippen (15) besitzen und/oder eine in der gleichen Ebene liegende Deckfläche, wie die zentrale Spanformebene (48), besitzen.

8. Vieleckiger Schneideinsatz nach einem der Ansprüche 1 bis 7, dadurch gekennzeichnet, daß die Längsrippen (15) in einem Abstand (20) von 0,05 bis 0,8 mm, vorzugsweise 0,05 bis 0,3 mm, vor der Schneidkante 12 enden und/oder daß die Längsrippen (15) in einer Spanbrechernut (14) angeordnet sind und daß deren Oberfläche unterhalb der Fläche des zentralen Spanbrechers (13) liegt.

9. Vieleckiger Schneideinsatz nach einem der Ansprüche 1 bis 8, dadurch gekennzeichnet, daß die Längsrippen (15) gegenüber der sie umgebenden Spanfläche oder der Spanbrechernut (14) eine Höhe (22) zwischen 0,3 mm bis 0,5 mm, vorzugsweise 0,3 bis 0,08 mm, aufweisen, die kleiner ist als die Höhe des zentralen Spanbrechers (13) gegenüber der Schneidkantenebene und/oder daß die konvexe Form der Längsrippe (15) im oberen Bereich einen Radius (23) von 0,1 bis 0,5 mm, vorzugsweise 0,1 bis 0,3 mm, aufweist, wobei weiterhin vorzugsweise die Längsrippen (15) unter einem Winkel (24) von mindestens 45° gegenüber der Normalen (25) auslaufen.

10. Vieleckiger Schneideinsatz nach einem der Ansprüche 1 bis 9, dadurch gekennzeichnet, daß im Querschnitt parallel zur Schneidkante die Seitenflächen (27) der Längsrippe (15) im Bereich der Spanfläche oder der Spanbrechernut (14) einen Winkel (26) zwischen 80 bis 120°, vorzugsweise 90 bis 100°, bilden.

11. Vieleckiger Schneideinsatz nach einem der Ansprüche 1 bis 10, dadurch gekennzeichnet, daß die Längsrippe eine im Bereich der Spanfläche oder Spanbrechernut (14) gemessene größte Basisbreite (28) von 0,2 bis 1,5 mm aufweist und/oder daß die Länge (29) der Längsrippen (15) 5mal bis 20mal größer als deren Basisbreite (28) ist.

12. Vieleckiger Schneideinsatz nach einem der Ansprüche 1 bis 11, dadurch gekennzeichnet, daß der zentrale Spanbrecher gegenüber einer durch die Schneidkanten definierten Ebene unter einem Winkel von 20 bis 40° ansteigt und/oder im Schneideckenbereich ballig ausgebildet ist und eine konvexe Oberfläche besitzt.

## Claims

1. Polygonal cutting insert for chip-forming machining having at least one face formed as a chip surface (10) with peripheral side surfaces which form clearance surfaces (12), the chip surface (10) having a central raised chip breaker (13) offset from a plane defined by the cutting edges (12) or from a chip-breaker groove (14) formed on or along the cutting edges and possibly having single raised portions,
characterized in that
the chip breaker (13, 48) is extended as at least one wedge-shaped longitudinal rib (15) in the chip runout region and has in longitudinal section and in cross section perpendicular thereto a convex shape free of sharp edges, the rib(s) (15) - in longitudinal section perpendicular to the cross section - running into the surrounding chip surface or chip-breaker groove (14) at a larger radius than in their upper region and are formed at their ends faced to the cutting corners as wedges and seen from a top view run out at an angle (33) smaller than 20°.

2. Cutting insert according to claim 1, characterized in that the longitudinal ribs (15) have a substantially lower height than the chip breaker (49) or than the central chip-forming plane.

3. Cutting insert according to claim 1 or 3, characterized in that the longitudinal rib (15), preferably two to five longitudinal ribs (15) per cutting edge, are symmetrical to a bisector (16) of the cutter corner angle and that their longitudinal axes (17) have a common intersection (18) on the chip breaker (13) and/or that the angle (19) between the longitudinal axes (17) of the longitudinal groove (15) and the bisector (16) of the cutting corner or between two longitudinal axes of neighbouring longitudinal ribs (15) is 0° or between 15° to 45°, preferably 15° to 30°.

4. Cutting insert according to claim 1 or 2, characterized in that the longitudinal rib(s) (15) is (are) asymmetrical to the cutter-corner bisector and that their longitudinal axes (17) and/or their longitudinal axes (17) and the bisector have a common intersection on the chip breaker.

5. Cutting insert according to one of claims 1 to 4, characterized in that the longitudinal ribs (15) are of different lenghts.

6. Cutting insert according to one of claims 1 to 4, characterized by a mirror-symmetrical arrangement of the chip breakers (48, 49, 15) relating to at least one central perpendicular to a line connecting two cutting corners.

7. Cutting insert according to one of claims 1 to 6 characterized by a central chip-forming plane (48) raised above an edge region adjacent to the cutting edge(s) and extending via a bevel (50) to the edge regions and/or to the cutter groove and also having nose-like projections (49) and longitudinal ribs (15) connected thereto, whereby the nose-like projections (49) are preferably higher than the longitudinal ribs (15) and/or have a surface lying in the same plane as the central chip-forming plane (48).

8. Cutting insert according to one of claims 1 to 7, characterized in that the longitudinal ribs (15) end at a spacing (20) of from 0,05 to 0,8 mm, preferably 0,05 and 0,3 mm from the cutting edge (12) and/or that the longitudinal ribs (15) are arranged in a chip-breaker groove (14) and their upper surfaces lie below the surface of the central chip breaker (13).

9. Cutting insert according to one of claims 1 to 8, characterized in that the longitudinal ribs (15) have relating to the surrounding chip surface or the chip-breaker groove (14) a height (22) between 0,3 and 0,5 mm, preferably 0,3 to 0,08 mm, which is smaller than the height of the central chip breaker (13) relative to the cutting edge plane and/or that the convex shape of the longitudinal rib (15) has in the upper region a radius (23) of 0,1 to 0,5 mm, preferably 0,1 to 0,3 mm, whereby furthermore preferably the longitudinal ribs (15) extend at an angle (24) of at least 45° relative to the perpendicular (25).

10. Cutting insert according to one of claims 1 to 9, characterized in that the side surface (27) of the longitudinal ribs (15) form in cross section parallel to the cutting edge in the region of the chip surface or of the chip-breaker groove (14) an angle (26) between 80 and 120°, preferably 90 to 100°.

11. Cutting insert according to one of claims 1 to 10, characterized in that the longitudinal rib has in the region of the chip surface or the chip-breaker groove (14) a measured greatest base width (28) of from 0,2 to 1,5 mm and/or that the length (29) or the longitudinal ribs (15) is five to twenty times greater that their basis width (28).

12. Cutting insert according to one of claims 1 to 11, characterized in that the central chip breaker rises relative to a plane defined by the cutting edges at an angle of 20 to 40° and/or is ball-shaped in the cutter corner region and has a convex upper surface.

## Revendications

1. Insert de coupe polygonal destiné à l'usinage par enlèvement de copeaux, dont la face courante du moins unilatérale forme la face de coupe (10) et dont les faces latérales périphériques forment les faces de dépouille (11), la face de coupe (10) présentant un brise-copeaux (13) convexe central qui est disposé vis-à-vis du plan défini par les tranchants (12) ou en face d'une rainure brise-copeaux (14) se joignant au tranchant (12) et le cas échéant y disposée, ladite rainure (14) présentant quelques élévations,
**caractérisé par le fait**
que le brise-copeaux (13,48) se termine sous forme d'au moins une nervure longitudinale (15) cunéiforme disposée dans le domaine d'écoulement des copeaux qui présente en coupe transversale longitudinale et en coupe transversale y perpendiculaire une forme convexe sans arêtes, la nervure longitudinale (15) ou bien les nervures longitudinales (15) se terminant -vu en coupe transversale perpendiculaire par rapport à l'axe longitudinal de la nervure longitudinale - vers la face de coupe qui l'entoure ou vers la rainure brise-copeaux (14) sous un rayon plus important que dans son domaine supérieur et son extrémité dirigée vers le coin de coupe étant réalisée en forme de coin et ladite nervure (15) se terminant - vu de dessus - sous un angle du taillant (33) inférieur à 20°.

2. Insert de coupe polygonal selon la revendication 1, caractérisé par le fait que les nervures longitudinales (15) présentent une hauteur beaucoup plus basse que le brise-copeaux (49) ou le plan central à former le copeau.

3. Insert de coupe polygonal selon la revendication 1 ou 2, caractérisé par le fait que la nervure longitudinale (15), de préférence deux à cinq nervures longitudinales (15) par coin de coupe, sont disposées de façon symétrique par rapport à une bissectrice (16) du coin de coupe et que leurs axes longitudinaux (17) présentent un point d'intersection (18) commun dans le domaine du brise-copeaux (13) et / ou que l'angle (19) formé entre l'axe longitudinal (17) de la nervure longitudinale (15) et la bissectrice (16) du coin de coupe ou entre deux axes longitudinaux de nervures longitudinales contiguës (15) est de 0° ou compris entre 15° et 45°, et de préférence entre 15° et 30°.

4. Insert de coupe polygonal selon la revendication 1 ou 2, caractérisé par le fait que la nervure longitudinale (15) ou bien les nervures longitudinales (15) est ou bien sont disposée(s) de manière asymétrique par rapport à la bissectrice du coin de coupe et que leurs axes longitudinaux (17) et / ou leurs axes longitudinaux (17) et la bissectrice présentent un point d'intersection commun dans le domaine du brise-copeaux.

5. Insert de coupe polygonal selon l'une des revendications 1 à 4, caractérisé par le fait que les nervures longitudinales (15) présentent des longueurs différentes.

6. Insert de coupe polygonal selon l'une des revendications 1 à 4, caractérisé en ce que les brise-copeaux (48, 49, 15) sont réalisés de manière symétrique spéculaire par rapport à du moins une médiatrice d'une ligne de jonction de deux coins de coupe.

7. Insert de coupe polygonal selon l'une des revendications 1 à 6, caractérisé par un plan (48) central à former le copeau qui s'élève au-dessus du domaine marginal adjacent au(x) tranchant(s), ledit plan aboutissant en direction du tranchant par-dessus un talus (50) au domaine marginal et / ou à une rainure à coupeaux et présentant aussi bien des parties en saillie (49) en forme de nez que des nervures longitudinales (15) adjacentes à ces parties, lesdites parties en saillie en forme de nez (49) présentant de préférence une plus grande hauteur que les nervures longitudinales (15) et / ou une face couvrante disposée au même niveau que le plan central (48) à former le copeau.

8. Insert de coupe polygonal selon l'une des revendications 1 à 7, caractérisé par le fait que les nervures longitudinales (15) se terminent à une distance (20) de 0,05 à 0,8 mm, de préférence de 0,05 à 0,3 mm, devant le tranchant 12 et/ou que les nervures longitudinales (15) sont disposées dans une rainure brise-copeaux (14) et que leur surface se trouve au-dessous de la face du brise-copeaux central (13).

9. Insert de coupe polygonal selon l'une des revendications 1 à 8, caractérisé par le fait que les nervures longitudinales (15) présentent par rapport à la face de coupe qui les entoure ou à la rainure brise-copeaux (14) une hauteur (22) comprise entre 0,3 mm et 0,5 mm, de préférence entre 0,3 mm et 0,08 mm, qui est plus basse que la hauteur du brise-copeaux (13) central vis-à-vis du plan défini par les tranchants et/ou que la forme convexe de la nervure longitudinale (15) présente dans la partie supérieure un rayon (23) compris entre 0,1 et 0,5 mm, de préférence entre 0,1 et 0,3 mm, les nervures longitudinales (15) se terminant au-delà de ce fait de préférence sous un angle (24) d'au moins 45° par rapport à la normale (25).

10. Insert de coupe polygonal selon l'une des revendications 1 à 9, caractérisé par le fait qu'en coupe transversale parallèle au tranchant, les faces latérales (27) de la nervure longitudinale (15) forment dans le domaine de la face de coupe ou de la rainure brise-copeaux (14) un angle (26) compris entre 80° et 120°, de préférence entre 90° et 100°.

11. Insert de coupe polygonal selon l'une des revendications 1 à 10, caractérisé par le fait que la nervure longitudinale présente dans le domaine de la face de coupe ou de la rainure brise-copeaux (14) une plus grande largeur de base (28) comprise entre 0,2 et 1,5 mm, et / ou que la longueur (29) des nervures longitudinales (15) est de cinq à vingt fois plus grande que leur largeur de base (28).

12. Insert de coupe polygonal selon l'une des revendications 1 à 11, caractérisé par le fait que le brise-copeaux central monte par rapport à un plan défini par les tranchants sous un angle compris entre 20° et 40° et/ou qu'il présente une forme bombée dans le domaine du coin de coupe ainsi qu'une surface convexe.
